# EUROPÄISCHE PATENTSCHRIFT

(11) **EP 4 420 822 B1**
(45) Veröffentlichungstag und Bekanntmachung des Hinweises auf die Patenterteilung: **03.06.2026**
(21) Anmeldenummer: 23157791.7
(22) Anmeldetag: 21.02.2023
(51) Int. Cl.: B23P 19/00, B23P 19/06

(54) **SETZWERKZEUG FÜR SPREIZMUTTERN, STOPFEN UND DERGLEICHEN**
SETTING TOOL FOR EXPANDING NUTS, FOR PLUGS AND THE LIKE
OUTIL DE POSE POUR ÉCROUS D'EXPANSION, BOUCHONS ET ANALOGUES

(43) Veröffentlichungstag der Anmeldung: 28.08.2024
(73) Patentinhaber: SECONSYS GmbH, 08056 Zwickau (DE)
(72) Erfinder: Feustel, Martin, 08485 Lengenfeld (DE)
(74) Vertreter: Schneiders & Behrendt Bochum

(56) Entgegenhaltungen:
- EP-A1- 3 744 472
- DE-A1- 102005 041 679
- DE-A1- 102010 005 798
- DE-A1- 102014 210 401
- DE-A1- 102015 014 221
- DE-A1- 102020 133 966

## Beschreibung

Die Erfindung betrifft ein Setzwerkzeug für Spreizmuttern, Stopfen und dergleichen, das insbesondere für den Automobilbau geeignet ist. Das Setzwerkzeug weist ein Magazin mit einer Mehrzahl von Aufnahmen für zu setzende Teile, ein Setzzylinder, einen Antrieb für das Magazin, einen Antrieb für den Setzzylinder, ein Vakuumterminal sowie ein Steuerungssystem zur Steuerung der einzelnen Komponenten des Setzwerkzeugs auf.

Setzvorgänge von Bauelementen stellen bei der Montage in der Serienfertigung, beispielsweise in der Automobilindustrie, wesentliche Prozesse dar. Es wurden deshalb zahlreiche Verfahren und Vorrichtungen entwickelt, um diese Vorgänge kostengünstig und effektiv zu gestalten. Häufig kommen dabei Industrieroboter mit entsprechenden Werkzeugen zum Einsatz. Insbesondere im Automobilbau kommt es dabei auf Präzision und Zuverlässigkeit an, um aufwändiges Nacharbeiten zu verhindern. Spezielle Techniken wurden zum Setzen von Spreizmuttern, Stopfen und dergleichen im Automobilbau entwickelt.

Aus der DE 10 2005 041 679 A1 ist ein Setzwerkzeug gemäß dem Oberbegriff des Anspruchs 1 sowie ein Verfahren zum automatischen Setzen von Spreizmuttern und/oder Tüllen in Verankerungskonstruktionen bekannt, bei dem die zu verbauenden Teile in einem Teilereservoir vorgehalten werden und mit dem Teilereservoir in eine Setzvorrichtung übernommen werden, bevor sie automatisch gesetzt werden. Nachteilig an diesem Verfahren ist die Vielzahl der Schritte und Bewegungen, die ein Setzwerkzeug beim Setzen der Bauteile ausführen muss. Dies ist zeitaufwendig.

Von Bedeutung ist hierbei, dass bei der Montage in der Automobilindustrie die Karossen über ein Elektrohängebahn zur jeweiligen Bearbeitungsposition befördert werden. Dabei kommt es vor, dass sich die Verankerungspositionen um wenige Millimeter verschieben. Für das Positionieren von Teilen mithilfe von Robotern ist eine solche Abweichung von der Normposition problematisch.

Nachteilig ist vor allem die Notwendigkeit, durch Mitarbeiter die Lage eines nicht platzierten Bauteils zu ermitteln, was zu Verzögerungen bei der automatisierten Montage führt. Hinzu kommt, dass die fehlenden Bauteile per Hand gesetzt werden müssen, was an der Unterseite einer Kraftfahrzeugkarosserie in einer ergonomisch ungünstigen Haltung stattfindet. Eine höhere Präzision des Setzvorgangs würde hier eine signifikante Verbesserung ergeben.

Aufgabe der Erfindung ist die Bereitstellung einer Vorrichtung und eines Systems zur Einschränkung der Zahl der Schritte und Bewegungen und zur Erhöhung der Präzision und Zuverlässigkeit beim Setzen von Bauteilen mithilfe von Montagerobotern, insbesondere von Spreizmuttern, Stopfen und dergleichen an der Unterseite von Karosserien. Darüber hinaus wäre es wünschenswert, über ein automatisches Überwachungssystem zu verfügen, mit dem die Präzision beim Setzen solcher Bauteile erhöht werden kann.

Diese Aufgabe wird mit einem Setzwerkzeug mit den Merkmalen des Anspruchs 1 gelöst, bei dem das Magazin ein Revolvermagazin ist, in den Aufnahmen des Magazins mit Vakuum beaufschlagbare Kolbenstangen angeordnet sind, die jeweils über einen Mitnehmer verfügen, wobei der Setzzylinder mit einem distal angeordneten Mitnahmeelement in eine Aufnahme des Mitnehmers der jeweils angesteuerten Kolbenstange eingreifen kann, um die jeweilige Kolbenstange in die Setzposition zu bringen, und dass die Kolbenstangen mit Vakuumköpfen ausgestattet sind, die geeignet sind, die zu setzende Teile anzusaugen, festzuhalten und beim Setzen freizugeben.

Insbesondere ist das erfindungsgemäße Setzwerkzeug am Arm eines Montageroboters angeordnet, der geeignet ist, das Setzwerkzeug in die jeweils gewünschte Montageposition zu bringen.

Das erfindungsgemäße Setzwerkzeug verfügt über ein Magazin für die zu setzenden Bauteile, das im Gegensatz zum vorstehend zitierten Stand der Technik aber fest in das Setzwerkzeug integriert ist und nicht aufgenommen werden muss. Das Magazin ist als Revolvermagazin ausgelegt, d. h., es kann um seine Achse gedreht werden, um die einzelnen Magazinpositionen in die Setzposition zu bringen. Das Revolvermagazin wird zweckmäßigerweise durch einen elektrischen Schrittmotor angetrieben. Die Zahl der Magazinpositionen ist in der Regel vom Einsatzzweck abhängig. Als sinnvoll hat sich eine Zahl im Bereich von 8 bis 24, insbesondere von 12 bis 20 erwiesen.

Innerhalb des Revolvermagazins, das zweckmäßigerweise die Form eines Zylinders hat, sind Kolbenstangen angeordnet, die distal über ein zum Zentrum hin weisenden Mitnehmer verfügen und mit deren Hilfe die Bauteile gesetzt werden. Die Kolbenstangen sind hohl und an das Vakuumterminal angeschlossen und können individuell mit Vakuum beaufschlagt werden. Ein distal an jeder Kolbenstange angeordneter Vakuumkopf dient dazu, das jeweils gewünschte Bauteil anzusaugen, zu halten und beim Setzvorgang freizugeben. Es versteht sich, dass an den Vakuumköpfen verschiedene Bauteile gehalten werden können, beispielsweise Spreizmuttern und Stopfen, die bei der Setzroutine in die dafür vorgesehenen Positionen gebracht werden. Es versteht sich, dass die zur Aufrechterhaltung des Vakuums notwendigen Dichtungen in den Aufnahmen angeordnet sind.

Insbesondere sind die Kolbenstangen des Revolvermagazins mit ihren Vakuumköpfen geeignet, die jeweiligen Bauteile aus einer vorbereiteten separaten Magazinscheibe anzusaugen. Die Anordnung der Bauteile in der Magazinscheibe entspricht der Position der Kolbenstangen in dem Revolvermagazin. Zur Aufnahme der Bauteile bewegt der Roboterarm das Setzwerkzeug in die Ansaugposition. Die Kolbenstangen aus dem Revolvermagazin werden in die Ausgangsposition gebracht, saugen die Bauteile an, wonach der Roboterarm in die Montageposition zurückgefahren wird. Die Vakuumköpfe sind vorzugsweise austauschbar, um sie an die Erfordernisse des jeweiligen Bauteils anzupassen.

Im Zentrum des Revolvermagazins befindet sich ein Setzzylinder, der über ein Mitnahmeelement verfügt, das in den Mitnehmer einer Kolbenstange eingreifen kann. Der Setzzylinder verbleibt in seiner zentralen Position und nimmt an der Rotation des Revolvermagazins nicht teil. Durch die Rotation des Revolvermagazins kann jede einzelne Magazinposition mit ihrer Kolbenstange in die jeweilige Setzposition gebracht werden, wonach der Setzzylinder mit seinem Mitnahmeelement in den Mitnehmer der jeweiligen Kolbenstange eingreifen und sodann die Kolbenstange ausfahren und das Bauteil platzieren kann. Zur Platzierung wird die jeweilige Kolbenstange auf Normaldruck gebracht. Nach dem Setzen des Bauteils fährt der Setzzylinder mit der Kolbenstange zurück und gibt den Mitnehmer der Kolbenstange wieder frei, der dann in seiner Ausgangsposition verbleibt. Durch Rotation des Revolvermagazins kommt die nächste Magazinposition mit ihrer Kolbenstange in die Setzposition. Die genaue Platzierung des Setzwerkzeugs erfolgt über den Roboterarm.

Das Mitnahmeelement kann ein beliebiges Element sein, das geeignet ist, in den Mitnehmer einer Kolbenstange einzugreifen. Der Mitnehmer hat dazu eine Ausnehmung, die sich bei der Rotation des Revolvermagazins über das Mitnahmeelement schiebt. Infrage für das Mitnahmeelement kommen beispielsweise Bügel, insbesondere aber Rollen, die auf die Dimension der Ausnehmung abgestimmt sind.

Es versteht sich, dass die Magazinpositionen der Reihe nach abgearbeitet werden können oder wechselnd, je nachdem, welches Bauteil benötigt wird und im nächsten Magazin verfügbar ist. Der Vorteil ist, dass die Wege des Setzwerkzeugs optimiert und kurz gehalten werden können.

Das erfindungsgemäße verwandte Revolvermagazin hat vorzugsweise Zylinderform mit Aufnahmen für die Kolbenstangen, die entlang der Peripherie angeordnet sind. Die einzelnen Aufnahmen mit den Kolbenstangen sind individuell mit Vakuum beaufschlagbar. Der Antrieb des Revolvermagazins kann pneumatisch oder elektrisch erfolgen; bevorzugt ist ein Antrieb über einen elektrischen Schrittmotor.

Das Revolvermagazin ist insbesondere in einem Mantel gelagert, der Anschlüsse für Vakuumleitungen für die einzelnen Aufnahmen aufweist. Um die einzelnen Aufnahmen mit Vakuum zu beaufschlagen, sind zwischen Revolvermagazin und Mantel einzelne Vakuumkanäle angelegt, die gegeneinander abgedichtet sind. Die Vakuumkanäle verlaufen zweckmäßigerweise parallel über den Umfang. Sie enden an Durchlässen, die in die einzelnen Aufnahmen führen. Jede Aufnahme hat ihren individuellen Vakuumkanal. Ein Außenmantel dient dem Schutz dieser Anordnung.

Der Setzzylinder ist im Innern des Revolvermagazins angeordnet und weist ein Mitnahmeelement auf, das auf die Peripherie des Revolvermagazins weist. Der Setzzylinder nimmt an der Rotation des Revolvermagazins nicht teil, d. h. weist immer in die gleiche Richtung und betätigt nach dem Ausfahren über das Mitnahmeelement die jeweils anstehende Kolbenstange mit ihrem angesaugten Bauteil. Nach Setzen des Bauteils fährt der Setzzylinder zurück und das Revolvermagazin bringt die nächsten Aufnahmen mit ihrer Kolbenstange und dem nächsten Bauteil durch Rotation in die Setzposition. Der Setzzylinder wird zweckmäßigerweise durch Druckluft angetrieben.

Gemäß einer bevorzugten Ausführungsform weist das erfindungsgemäße Setzwerkzeug am Außenmantel des Revolvermagazins eine Kameraeinheit auf. Diese soll an einer Karosserie den Mittelpunkt der Montage- oder Verankerungsposition vor jedem Setzvorgang bestimmen und eine etwaige Abweichung vom vorgegebenen Mittelpunkt der Verankerungsposition berechnen. Bei einer zu großen Abweichung muss der Roboter neu positioniert werden, da sonst eine korrekte Bauteilmontage nicht erfolgen kann. Eine zu große Abweichung von der Referenzposition entsteht beispielsweise durch unsauberes Arbeiten in vorausgegangenen Arbeitsschritten im Karosseriebau oder durch eine ungenaue Führung der Karosserie in der Bearbeitungsstation. Vorzugsweise ist die Kameraeinrichtung am Mantel des Revolvermagazins in Höhe der Setzposition angeordnet. Zusätzlich kann am Außenmantel ein Beleuchtungselement angeordnet sein.

Das erfindungsgemäße Setzwerkzeug ist insbesondere am Arm eines Montageroboters montiert, wie er beispielsweise in der Automobilindustrie eingesetzt wird. Beispielsweise können in der entsprechenden Bearbeitungsstation zum Setzen von Spreizmuttern, Stopfen und dergleichen bis zu vier solcher Montageroboter eingesetzt werden. Entsprechend betrifft die Erfindung auch eine Kombination aus einem Montageroboter und dem vorstehend beschriebenen Setzwerkzeug.

Ferner betrifft die Erfindung ein System, das aus der Kombination eines Montageroboters und eines erfindungsgemäßen Setzwerkzeugs sowie einer separaten Magazinscheibe mit Aufnahmen für die zu setzenden Bauteile besteht, die von den in den Aufnahmen des Revolvermagazins angeordneten Kolbenstangen angesaugt werden. Eine solche separate Magazinscheibe wird immer dann wieder neu aufgefüllt, wenn der Montageroboter die Bauteile in einer Fahrzeugkarosserie setzt. Es versteht sich, dass die Bauteile in der separaten Magazinscheibe die gleiche Anordnung haben, wie nach Aufnahme durch das Revolvermagazin.

Es versteht sich ferner, dass das erfindungsgemäße Setzwerkzeug wie auch die Kombination aus Setzwerkzeug und Montageroboter und das System aus Setzwerkzeug, Montagerouter und Magazinscheibe über die nötigen Steuereinrichtungen verfügen, um die ihnen gestellten Aufgaben zu erfüllen. Insbesondere erfordert dies die zeitliche Abstimmung der einzelnen Schritte und Bewegungen aufeinander. Solche Steuerungen und die dafür erforderliche Software sind dem Fachmann geläufig.

Die Erfindung wird durch die beiliegenden Abbildungen näher erläutert.

Es zeigen in bevorzugter Ausführungsform
Figur 1 ein erfindungsgemäßes Setzwerkzeug in der Gesamtansicht;
Figur 2 die Setzeinheit des Setzwerkzeugs gemäß Figur 1;
Figur 3 das Revolvermagazin der Setzeinheit gemäß Figur 2;
Figur 4 eine Kolbenstange mit Vakuumkopf;
Figur 5 den Setzzylinder eines erfindungsgemäßen Setzwerkzeugs;
Figur 6 das erfindungsgemäße Setzwerkzeug montiert auf einem Roboterarm; und
Figur 7 Kombinationen aus Vakuumköpfen und Bauteilen.

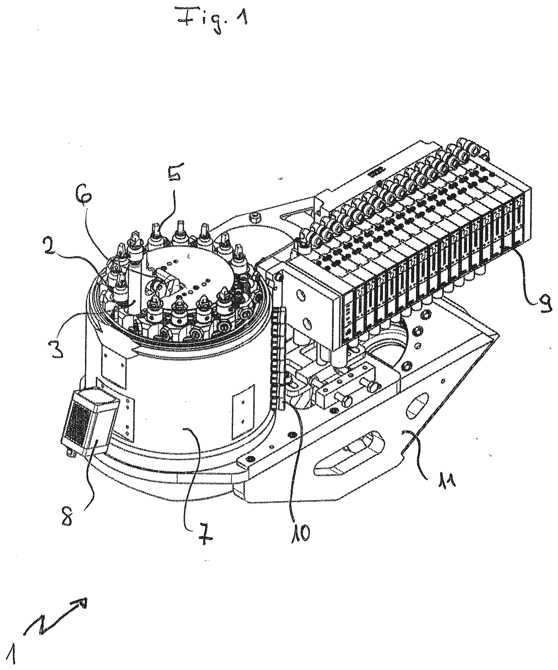

Figur 1 zeigt eine Gesamtdarstellung des erfindungsgemäßen Setzwerkzeugs 1 mit dem Revolvermagazin 2 und den darin peripher und in regelmäßigen Abständen in Aufnahmen angeordneten Kolbenstangen 3 mit aufgesetzten Vakuumköpfen 4 und Bauteilen 5. Das Revolvermagazin 2 wird von einem nicht dargestellten Schrittmotor angetrieben dergestalt, dass die Kolbenstangen 3 in die gewünschte Setzposition gebracht werden. Im Zentrum des Revolvermagazins 2 findet sich der stationäre Setzzylinder 6, dargestellt im Zusammenhang mit einer ausgefahrenen Kolbenstange 3 in der Setzposition. Das Revolvermagazin 2 ist von einem Außenmantel 7 umgeben, an dessen Frontseite eine Kamera 8 angeordnet ist, der an der Rotation des Revolvermagazins 2 nicht teilnimmt. Die Kamera 8 ist so positioniert, dass sie auf die Montageposition der jeweils in Setzposition befindlichen Kolbenstange 3 fokussiert ist. Ein Vakuumterminal 9 ist über Vakuumschläuche (nicht dargestellt) mit Vakuumanschlüssen 10 verbunden und versorgt die Aufnahmen und Kolbenstangen 3 individuell steuerbar mit Unterdruck. Das Setzwerkzeug 1 ist auf eine Trägerplatte 11 montiert, die ihrerseits am Arm eines Montageroboters montiert ist. Gemäß einer bevorzugten Ausführungsform weist das erfindungsgemäße Setzwerkzeug 1 sechzehn Aufnahmen mit 16 darin angeordneten Kolbenstangen 3 auf.

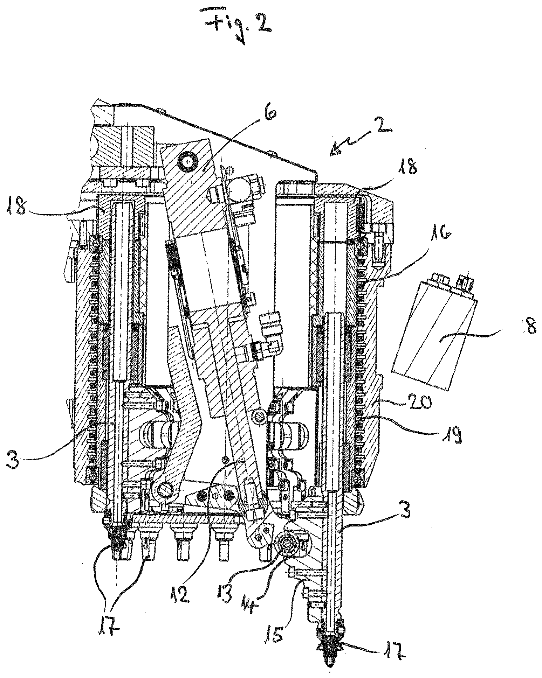

Figur 2 zeigt eine Schnittdarstellung des Revolvermagazins 2 ohne den Mantel 7. Im Zentrum des Revolvermagazins 2 befindet sich der Setzzylinder 6, der am Ende seiner Schubstange 12 ein Mitnahmeelement 13 in Form einer Rolle aufweist. Die Rolle 13 greift in eine Ausnehmung 14 des Mitnehmers 15 einer Kolbenstange 3 ein. Der Setzzylinder 6 und die Kolbenstange 3 sind in ausgefahrenem Zustand dargestellt. Durch Ausfahren der Kolbenstange wird das jeweilige Bauteil gesetzt. Die Kolbenstange 3 ist in einer Aufnahme 16 des Revolvermagazins 2 angeordnet. Weitere Aufnahmen 16 und Kolbenstangen 3 sind an der Peripherie des Revolvermagazins 2 angeordnet; von den hinter der Schnittebene angeordneten Kolbenstangen 3 sind die Vakuumköpfe 17 dargestellt.

Das Revolvermagazin 2 weist an seinem oberen Ende einen Zahnkranz 18 auf, der über einen Zahnriemen (nicht dargestellt) mit einem vorzugsweise elektrischen Schrittmotor angetrieben wird. Der Schrittmotor ist geeignet, die einzelnen Kolbenstangen in die Setzposition zu drehen. Dies kann sowohl der Reihe nach erfolgen als auch in beliebiger Abfolge.

An der Peripherie des Revolvermagazins 2 sind Vakuumkanäle 19 angeordnet, im dargestellten Fall sechzehn gegeneinander abgegrenzte und abgedichtete Kanäle für insgesamt sechzehn Aufnahmen 16 mit ihren darin angeordneten Kolbenstangen 3. Jede Aufnahme 16 ist mit einer nach außen weisenden Durchbrechung ihrer Wandung mit einem zugehörigen Vakuumkanal 19 verbunden. Die Vakuumkanäle 19 sind ihrerseits Teil eines Mantels 20, der das Revolvermagazin 2 umgibt. Der Mantel 20 nimmt an der Rotation des Revolvermagazins 2 nicht teil.

Die einzelnen Vakuumkanäle 19 sind über Schlauchverbindungen (nicht dargestellt) mit dem Vakuumterminal 9 (Figur 1) verbunden. Sie verlaufen parallel zueinander über den Umfang.

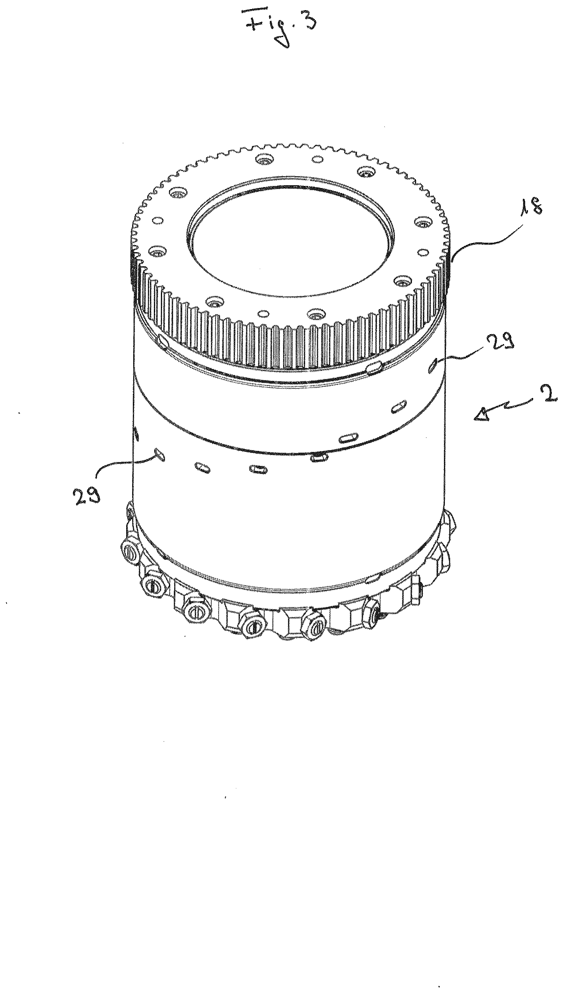

Figur 3 zeigt das eigentliche Revolvermagazin 2 mit dem Zahnkranz 18 am oberen Ende und den Durchbrechungen 29 für den Anschluss der Aufnahmen 16 an die Vakuumanschlüsse 10. Das Magazin ist in eine obere und eine untere Hälfte unterteilt. Die Durchbrechungen 29 korrespondieren mit den Vakuumkanälen 19, die zwischen dem Mantel 20 und dem Revolvermagazin 2 verlaufen.

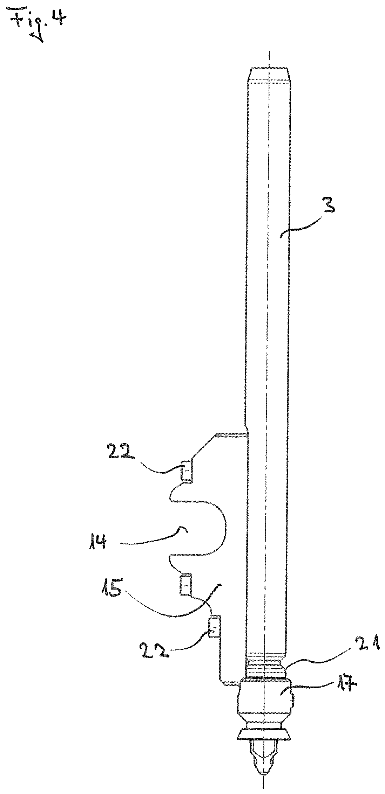

Figur 4 zeigt eine erfindungsgemäß verwandte Kolbenstangen 3. Die Kolbenstange 3 ist ein Hohlprofil, insbesondere ein einfaches Rohr, das in einem profilierten Ende 21 ausläuft, auf das der Vakuumkopf 17 aufgesetzt ist. Seitlich ist ein Mitnehmer 15 angeschraubt - die Schraubenköpfe 22 sind dargestellt, zentral befindet sich eine Aufnahme 14, in die das Mitnahmeelement 13 des Setzzylinders 6 eingreift. Die Vakuumköpfe 17 werden vorzugsweise durch Gewindestifte gesichert.

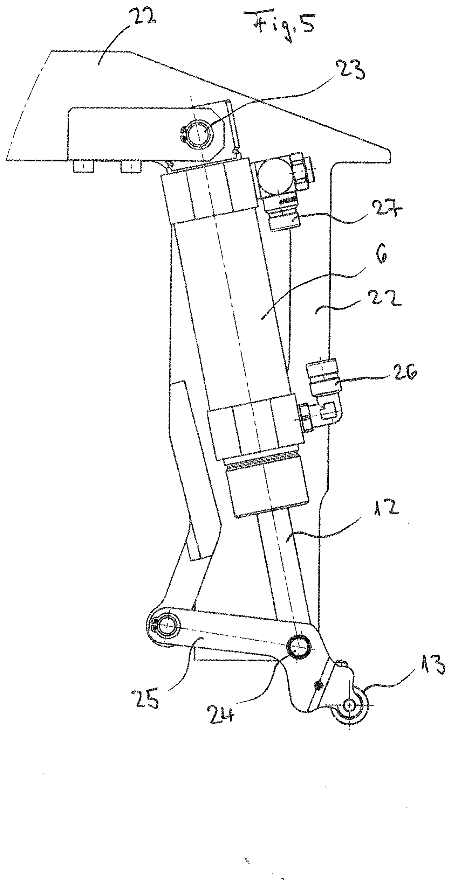

Figur 5 zeigt einen erfindungsgemäß verwandten Setzzylinder 6, der an einer in das Zentrum des Revolvermagazins 2 ragenden Halterung 22 am Drehgelenk 23 drehbar festgelegt ist. Der Setzzylinder 6 weist distal zu Halterung eine Schubstange 12 auf, die in der Mitnahmerolle 13 endet. Die Mitnahmerolle 13 selbst ist drehbar mit der Schubstange 12 über das Drehgelenk 24 verbunden und wird über den mit der Halterung 22 gelenkig verbundenen Arm 25 in Position gehalten. Der Setzzylinder 6 wird mit Druckluft über die Anschlüsse 26 und 27 betrieben.

Der Setzzylinders 6 und die Kolbenstangen 3 sind konstruktionsmäßig so aufeinander abgestimmt, dass bei der Rotation des Revolvermagazins 2 die Mitnehmer 15 der Kolbenstangen 3 das Mitnahmeelement 13 des Setzzylinders 6 in ihrer Aufnahme 14 aufnehmen und nach dem Setzvorgang wieder freigegeben. Während des Setzvorgangs bleibt das Mitnahmeelement 13 des Setzzylinders 6 in der Aufnahme 14 gefangen und folgt der Abwärts/Aufwärtsbewegung der Schubstange 12.

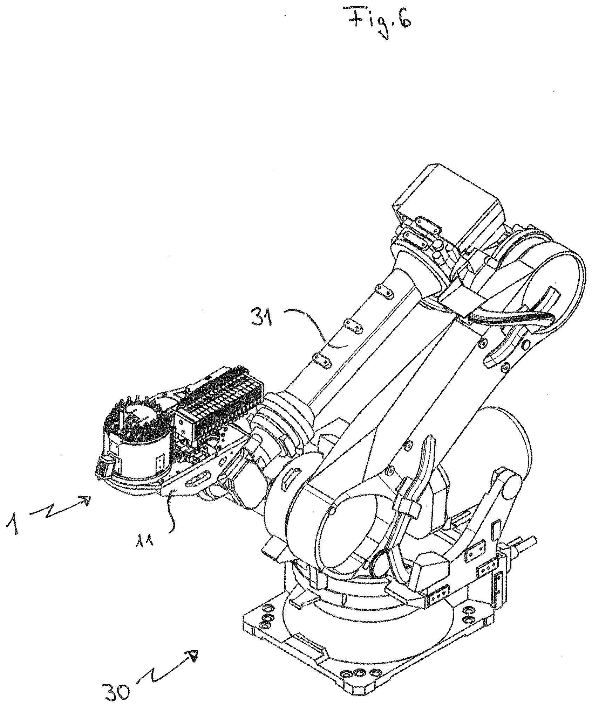

Figur 6 zeigt einen üblichen Montageroboter 30, wie er bei der Montage von Automobilkarosserien Industrie verwandt wird, mit auf dem Arm 31 mittels Trägerplatte 11 montiertem Setzwerkzeug 1. Das Setzwerkzeug 1 kann mit dem Roboterarm unter die Karosserie eines Fahrzeugs geführt werden und dort die an den Vakuumköpfen gehaltenen Bauteile an der jeweiligen Karosserie platzieren. Während des Setzvorgangs wird die jeweils angesteuerte Kolbenstange 3 vom Vakuum abgekoppelt, damit das jeweilige Bauteil frei wird, und mithilfe des Setzzylinders 6 in die damit zu versehende Karosserieöffnung gepresst. Die noch nicht gesetzten Bauteile bleiben an ihre Vakuumleitung angekoppelt. Nach dem Setzen aller Bauteile wird das Setzwerkzeug 1 vom Montageroboter 30 zu einer Magazinscheibe bewegt, die neue Bauteile für das Setzwerkzeug 1 bereithält. Diese neuen Bauteile werden erneut mit Vakuum angesaugt für den nächsten Setzzyklus.

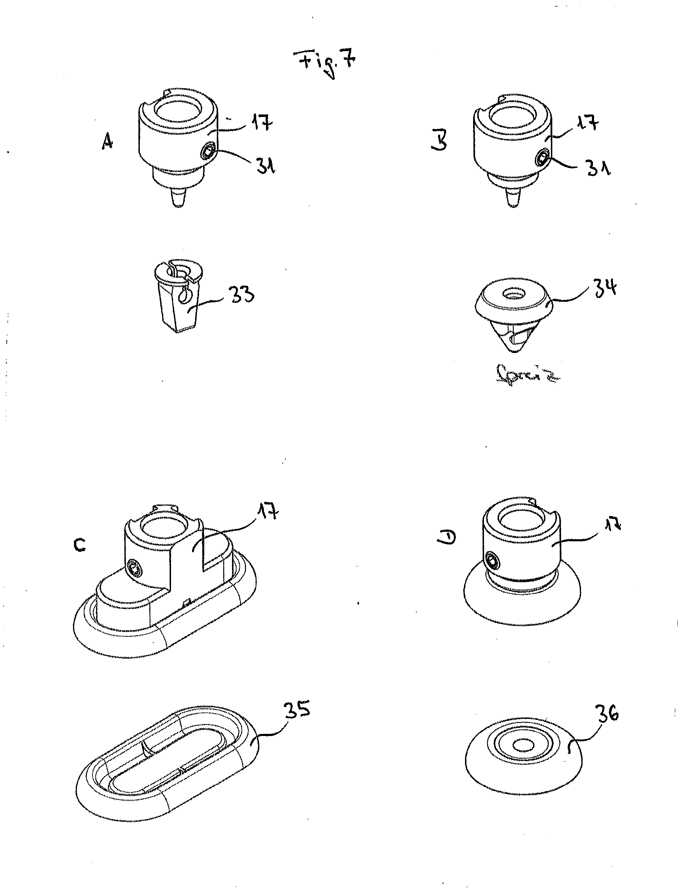

Figur 7 zeigt verschiedene Varianten von Vakuumköpfen 17 für die jeweiligen anzusetzenden Bauteile. Die Vakuumköpfe 17 werden durch einen Gewindestift am profilierten Ende 21 einer Kolbenstange 3 gesichert; dargestellt ist die Bohrung 32 für den Gewindestift.

Figur 7A zeigt den Vakuumkopf 17 zusammen mit einem Spreizdübel 33, Figur 7B zusammen mit einer weiteren Variante eines Spreizdübels 34. Figur 7C und 7D zeigen Varianten eines Vakuumkopfs 17 zusammen mit einem länglichen Stopfen 35 und einem Rundstopfen 36.

Das erfindungsgemäße Setzwerkzeug kann nicht nur in der Automobilindustrie zum automatischen Setzen einer Vielzahl von Bauteilen eingesetzt werden, sondern generell in der Serienfertigung technischer Produkte.

Dem Fachmann ist die Abstimmung und Steuerung solcher automatisierten Montagevorgänge geläufig. Dafür geeignete Programme sind verfügbar oder für den Fachmann ohne weiteres herstellbar.

## Patentansprüche

1. Setzwerkzeug für Spreizmuttern, Stopfen und dergleichen, insbesondere für den Automobilbau, mit
- einem Magazin (2) mit einer Mehrzahl an Aufnahmen (16) für zu setzende Teile (33, 34, 35, 36),
- einem Setzzylinder (6),
- einem Antrieb für das Magazin,
- einem Antrieb für den Setzzylinder (6),
- einem Vakuumterminal (9),
- einem Steuerungssystem zur Steuerung der einzelnen Komponenten des Setzwerkzeugs (1),
**dadurch gekennzeichnet, dass** das Magazin (2) ein Revolvermagazin ist, in den Aufnahmen (16) des Magazins mit Vakuum beaufschlagbare Kolbenstangen (3) angeordnet sind, die jeweils über einen Mitnehmer (15) verfügen, wobei der Setzzylinder (6) mit einem distal angeordneten Mitnahmeelement (13) in eine Aufnahme (14) des Mitnehmers (15) der jeweils angesteuerten Kolbenstange (3) eingreifen kann, um die jeweilige Kolbenstange (3) in die Setzposition zu bringen, und dass die Kolbenstangen (3) mit Vakuumköpfen (17) ausgestattet sind, die geeignet sind, die zu setzenden Teile (33, 34, 35, 36) anzusaugen, festzuhalten und beim Setzen freizugeben.

2. Setzwerkzeug nach Anspruch 1, **dadurch gekennzeichnet, dass** das Revolvermagazin (2) Zylinderform hat und über einen elektrischen Schrittmotor antreibbar ist.

3. Setzwerkzeug nach Anspruch 1 oder 2, **dadurch gekennzeichnet, dass** die Aufnahmen (16) des Revolvermagazins (2), in denen die Kolbenstangen (3) gelagert sind, peripher angeordnet sind, wobei die einzelnen Aufnahmen (16) individuell mit Vakuum beaufschlagbar sind.

4. Setzwerkzeug nach einem der vorstehenden Ansprüche, **dadurch gekennzeichnet, dass** das Revolvermagazin (2) in einem Mantel (20) gelagert ist, der Vakuumleitungen (19) zu den einzelnen Aufnahmen (16) aufweist, wobei die Vakuumleitungen (19) zwischen Revolvermagazin (2) und Mantel (20) parallel verlaufende Vakuumkanäle sind.

5. Setzwerkzeug nach Anspruch 4, **dadurch gekennzeichnet, dass** die Vakuumkanäle (19) gegeneinander abgegrenzt und abgedichtet sind.

6. Setzwerkzeug nach einem der vorstehenden Ansprüche, **dadurch gekennzeichnet, dass** der Setzzylinder (6) innerhalb des Revolvermagazins (2) angeordnet ist.

7. Setzwerkzeug nach einem der vorstehenden Ansprüche, **dadurch gekennzeichnet, dass** der Setzzylinder (6) an ein Druckluftsystem angeschlossen ist.

8. Setzwerkzeug nach einem der vorstehenden Ansprüche, **dadurch gekennzeichnet, dass** das Mitnahmeelement (13) des Setzzylinders (6) eine bewegliche Rolle ist, die in die Aussparung (14) des Mitnehmers (15) einer jeden Kolbenstange (3) eingreifen kann.

9. Setzwerkzeug nach einem der vorstehenden Ansprüche, **dadurch gekennzeichnet, dass** die Vakuumköpfe (21) der Kolbenstange (3) austauschbar und an die Form des jeweils zu setzenden Teils (33, 34, 35, 36) angepasst sind.

10. Setzwerkzeug nach einem der vorstehenden Ansprüche, **gekennzeichnet durch** eine Kameraeinheit (8) am Außenmantel (7) des Revolvermagazins (2) zur Erkennung des Mittelpunkts der Montageposition des zu setzenden Teils (33, 34, 35, 36) und gegebenenfalls zur Steuerung des Setzvorgangs.

11. Setzwerkzeug nach einem der vorstehenden Ansprüche, montiert auf dem Arm (31) eines Montageroboters (30).

12. Montageroboter mit einem Setzwerkzeug nach einem der Ansprüche 1 bis 11.

13. System bestehend aus einem Montageroboter (30) nach Anspruch 12 sowie einer separaten Magazinscheibe mit Aufnahmen für die zu setzenden Teile (33, 34, 35, 36), aus der das Setzwerkzeug (1) die Teile (33, 34, 35, 36) mittels der Vakuumköpfe (21) der Kolbenstangen ansaugt.

## Claims

1. Setting tool for expanding nuts, plugs and the like, in particular for automotive construction, having
- a magazine (2) with a plurality of receptacles (16) for the parts (33, 34, 35, 36) to be set,
- a setting cylinder (6),
- a drive for the magazine,
- a drive for the setting cylinder (6),
- a vacuum terminal (9),
- a control system for controlling the individual components of the setting tool (1),
**characterised in that** the magazine (2) is a revolver magazine and piston rods (3) that can be subjected to vacuum are arranged in the receptacles (16) of the magazine and each have a driver (15), wherein the setting cylinder (6) can engage with a distally arranged driving element (13) in a receptacle (14) of the driver (15) of the respectively actuated piston rod (3) in order to bring the respective piston rod (3) into the setting position, and **in that** the piston rods (3) are provided with vacuum heads (17) that are suitable for suctioning up and holding the parts (33, 34, 35, 36) to be set and releasing them during setting.

2. Setting tool according to claim 1, **characterised in that** the revolver magazine (2) has a cylindrical shape and can be driven by an electric stepper motor.

3. Setting tool according to claim 1 or 2, **characterised in that** the receptacles (16) of the revolver magazine (2) in which the piston rods (3) are held are arranged peripherally, wherein the individual receptacles (16) can be individually subjected to vacuum.

4. Setting tool according to any one of the preceding claims, **characterised in that** the revolver magazine (2) is held in a casing (20) that has vacuum lines (19) to the individual receptacles (16), wherein the vacuum lines (19) between the revolver magazine (2) and the casing (20) are parallel vacuum channels.

5. Setting tool according to claim 4, **characterised in that** the vacuum channels (19) are delimited and sealed from each other.

6. Setting tool according to any one of the preceding claims, **characterised in that** the setting cylinder (6) is arranged within the revolver magazine (2).

7. Setting tool according to any one of the preceding claims, **characterised in that** the setting cylinder (6) is connected to a compressed air system.

8. Setting tool according to any one of the preceding claims, **characterised in that** the driving element (13) of the setting cylinder (6) is a movable roller that can engage in the recess (14) of the driver (15) of each piston rod (3).

9. Setting tool according to any one of the preceding claims, **characterised in that** the vacuum heads (21) of the piston rods (3) are interchangeable and adapted to the shape of the respective part (33, 34, 35, 36) to be set.

10. Setting tool according to any one of the preceding claims, **characterised by** a camera unit (8) on the outer casing (7) of the revolver magazine (2) for detecting the centre of the assembly position of the part (33, 34, 35, 36) to be set and, if necessary, for controlling the setting process.

11. Setting tool according to one of the preceding claims, mounted on the arm (31) of an assembly robot (30).

12. Assembly robot having a setting tool according to any one of claims 1 to 11.

13. System consisting of an assembly robot (30) according to claim 12 and a separate magazine disc having receptacles for the parts (33, 34, 35, 36) to be set, from which the setting tool (1) suctions up the parts (33, 34, 35, 36) by means of the vacuum heads (21) of the piston rods.

## Revendications

1. Outil de pose pour écrous à expansion, bouchons et similaires, notamment pour la construction automobile, avec
- un magasin (2) avec une pluralité de logements (16) pour les pièces à poser (33, 34, 35, 36),
- un cylindre de pose (6),
- un entraînement pour le magasin,
- un entraînement pour le cylindre de pose (6),
- un terminal à vide (9),
- un système de commande pour commander les composants individuels de l'outil de pose (1),
**caractérisé en ce que** le magasin (2) est un magasin revolver, des tiges de piston (3) pouvant être soumises à un vide sont agencées dans les logements (16) du magasin, qui disposent chacune d'un entraîneur (15), où le cylindre de pose (6) peut s'engager avec un élément d'entraînement (13) agencé de manière distale dans un logement (14) de l'entraîneur (15) de la tige de piston (3) respectivement commandée afin d'amener la tige de piston (3) respective dans la position de pose, et **en ce que** les tiges de piston (3) sont équipées de têtes à vide (17) qui sont appropriées pour aspirer les pièces à poser (33, 34, 35, 36), les maintenir et les libérer lors de la pose.

2. Outil de pose selon la revendication 1, **caractérisé en ce que** le magasin revolver (2) a une forme cylindrique et peut être entraîné par un moteur pas à pas électrique.

3. Outil de pose selon la revendication 1 ou 2, **caractérisé en ce que** les logements (16) du magasin revolver (2), dans lesquels sont logées les tiges de piston (3), sont agencés à la périphérie, où les logements individuels (16) peuvent être soumis individuellement à un vide.

4. Outil de pose selon l'une quelconque des revendications précédentes, **caractérisé en ce que** le magasin revolver (2) est logé dans une enveloppe (20) qui présente des conduites de vide (19) vers les logements individuels (16), où les conduites de vide (19) entre le magasin revolver (2) et l'enveloppe (20) sont des canaux de vide parallèles.

5. Outil de pose selon la revendication 4, **caractérisé en ce que** les canaux de vide (19) sont délimités les uns par rapport aux autres et étanchéifiés.

6. Outil de pose selon l'une quelconque des revendications précédentes, **caractérisé en ce que** le cylindre de pose (6) est agencé à l'intérieur du magasin revolver (2).

7. Outil de pose selon l'une quelconque des revendications précédentes, **caractérisé en ce que** le cylindre de pose (6) est raccordé à un système à air comprimé.

8. Outil de pose selon l'une quelconque des revendications précédentes, **caractérisé en ce que** l'élément d'entraînement (13) du cylindre de pose (6) est un rouleau mobile qui peut s'engager dans l'évidement (14) de l'entraîneur (15) de chaque tige de piston (3).

9. Outil de pose selon l'une quelconque des revendications précédentes, **caractérisé en ce que** les têtes à vide (21) de la tige de piston (3) sont interchangeables et adaptées à la forme de la pièce à poser respective (33, 34, 35, 36).

10. Outil de pose selon l'une quelconque des revendications précédentes, **caractérisé par** une unité de caméra (8) sur l'enveloppe extérieure (7) du magasin revolver (2) pour détecter le centre de la position de montage de la pièce à poser (33, 34, 35, 36) et éventuellement pour commander le processus de pose.

11. Outil de pose selon l'une quelconque des revendications précédentes, monté sur le bras (31) d'un robot de montage (30).

12. Robot de montage avec un outil de pose selon l'une quelconque des revendications 1 à 11.

13. Système constitué d'un robot de montage (30) selon la revendication 12 et d'un disque de magasin séparé avec des logements pour les pièces à poser (33, 34, 35, 36), à partir duquel l'outil de pose (1) aspire les pièces (33, 34, 35, 36) au moyen des têtes à vide (21) des tiges de piston.
